(19) Europäisches Patentamt / European Patent Office / Office européen des brevets

(11) **EP 4 446 298 A1**

(12) **EUROPEAN PATENT APPLICATION**

(43) Date of publication:
**16.10.2024 Bulletin 2024/42**

(21) Application number: **23197839.6**

(22) Date of filing: **18.09.2023**

(51) International Patent Classification (IPC):
**C04B 41/00** (2006.01)    **C04B 41/45** (2006.01)
**C04B 41/85** (2006.01)    **H01M 10/658** (2014.01)
**B01J 13/00** (2006.01)    **B32B 5/02** (2006.01)
**B32B 15/04** (2006.01)    **B32B 27/06** (2006.01)
**B32B 18/00** (2006.01)    **H01B 3/10** (2006.01)
**C04B 111/00** (2006.01)    **C04B 111/28** (2006.01)

(52) Cooperative Patent Classification (CPC):
(C-Sets available)
**C04B 41/009; B01J 13/0091; B32B 5/022;**
**B32B 15/046; B32B 18/00; B32B 27/065;**
**C04B 41/4596; C04B 41/85; H01B 3/10;**
**H01M 10/658; H01M 50/44;** C04B 2111/00844;
C04B 2111/28; C04B 2237/341; C04B 2237/38

(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.04.2023 KR 20230048179**

(71) Applicant: **Samsung SDI Co., Ltd.**
**Yongin-si, Gyeonggi-do 17084 (KR)**

(72) Inventors:
• **Ra, Ha Na**
**17084 Yongin-si, Gyeonggi-do (KR)**
• **Woo, Myung Heui**
**17084 Yongin-si, Gyeonggi-do (KR)**
• **Ryu, Bo Kyung**
**17084 Yongin-si, Gyeonggi-do (KR)**
• **Park, Hye Jin**
**17084 Yongin-si, Gyeonggi-do (KR)**
• **Lee, Jae Hyun**
**17084 Yongin-si, Gyeonggi-do (KR)**
• **Yang, Seung Yong**
**17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

(54) **BATTERY INSULATION SHEET AND MANUFACTURING METHOD THEREOF**

(57) A battery insulation sheet includes a substrate, and an aerogel layer on the substrate, wherein the aerogel layer includes a fibrous support; an aerogel; and a functional material including a binder, a dispersant, or a combination thereof, and satisfies Formula 1 below:

Formula 1

$$50 \leq A \leq 100{,}000, \quad A = T_i / D_s,$$

wherein, in Formula 1, $T_i$ denotes a thickness of the aerogel layer, and $D_s$ denotes an average diameter of the fibrous support.

   **(Cont. next page)**

FIG. 4

**X300**

**X800**

(52) Cooperative Patent Classification (CPC): (Cont.)

C-Sets
**C04B 41/009, C04B 35/16;**
**C04B 41/009, C04B 35/19;**
**C04B 41/4596, C04B 41/4582, C04B 14/064, C04B 2103/40;**
**C04B 41/4596, C04B 41/4582, C04B 14/302, C04B 2103/40**

**Description**

**BACKGROUND**

**1. Field**

Embodiments of the present disclosure relate to a battery insulation sheet and a method of manufacturing the same.

**2. Description of the Related Art**

Secondary batteries are power storage systems which provide high energy densities for converting electrical energy into chemical energy and for storing the chemical energy. As compared with non-rechargeable primary batteries, secondary batteries are rechargeable and thus are widely used in IT devices such as smartphones, cellular phones, laptop computers, and tablet personal computers (PCs). Recently, in order to reduce environmental pollution, interest in electric vehicles has increased, and thus high-capacity secondary batteries have been adopted in electric vehicles. Such secondary batteries are desired or required to have characteristics such as high density, high output power, and stability.

In cases including a plurality of high-capacity cells, such as lithium-ion secondary batteries, thermal runaway of one cell due to overheating may adversely affect other adjacent cells, and thus adjacent cells are desired or required to be thermally insulated from each other.

Accordingly, in the related art, a plate, an insulating resin plate, or the like is disposed between cells to electrically and thermally insulate adjacent cells from each other.

**SUMMARY**

The invention is defined by the appended claims. The description that follows is subjected to this limitation. Any disclosure lying outside the scope of said claims is only intended for illustrative as well as comparative purposes. According to one or more embodiments, a battery insulation sheet having excellent or suitable heat insulation, compressive property, and dusting property, and a method of manufacturing the same.

One or more embodiments of the present disclosure will be set forth in part in the description which follows and, in part, will be apparent from the description, or may be learned by practice of the presented embodiments of the disclosure.

One or more embodiments of the present disclosure provide a battery insulation sheet including a substrate, and an aerogel layer on the substrate, wherein the aerogel layer includes a fibrous support; an aerogel; and a functional material including a binder, a dispersant, or a combination thereof, and satisfies Formula 1 below.

Formula 1

$$50 \leq A \leq 100{,}000, \ A = T_i / D_s$$

In Formula 1, $T_i$ denotes a thickness of the aerogel layer, and $D_s$ denotes an average diameter of the fibrous support.

In one or more embodiments, the aerogel layer may have a thickness of 1 mm to 10 mm.

In one or more embodiments, the average diameter of the fibrous support may be 0.1 $\mu$m to 20 $\mu$m.

In one or more embodiments, A may be in a range of 200 to 10,000.

In one or more embodiments, a surface of the fibrous support may be coated with the aerogel.

In one or more embodiments, the substrate may be at least one selected from a group consisting of a resin, a metal, and an inorganic material other than metals.

In one or more embodiments, the fibrous support may be at least one selected from a group consisting of a natural fiber, a silica fiber, a glass fiber, a carbon fiber, a basalt fiber, and a polymer fiber.

In one or more embodiments, the aerogel may have a Brunauer-Emmett-Teller (BET) specific surface area of 500 $m^2$/g to 1,000 $m^2$/g.

In one or more embodiments, the binder may include an aqueous polymer binder, and the aqueous polymer binder may be at least one selected from a group consisting of an aqueous polymer, an anionic water-soluble polymer, a cationic water-soluble polymer, and a water-dispersible polymer.

In one or more embodiments, an amount of the binder may be 0.5 wt% to 20 wt% with respect to a total content (e.g., amount) of the aerogel layer.

In one or more embodiments, the binder may include an aqueous polymer and a water-dispersible polymer, and a weight ration of the aqueous polymer to the water-dispersible polymer may be 1: 1 to 1: 5.

In one or more embodiments, the dispersant may be at least one selected from a group consisting of a surfactant and a phosphate-based salt.

In one or more embodiments, an amount of the dispersant may be 0.1 wt% to 6 wt% with respect to a total content (e.g., amount) of the aerogel layer.

In one or more embodiments, a weight ration of the binder and the dispersant may be 1:0.001 to 1:0.67.

In one or more embodiments, the aerogel layer may include the fibrous support at 5 wt% to 70 wt%, the aerogel at 10 wt% to 90 wt% of, and the functional material at 0.5 wt% to 20 wt% with respect to a total content (e.g., amount) of the aerogel layer.

In one or more embodiments, the aerogel layer may include the fibrous support at 25 wt% to 60 wt%, the aerogel at 30 wt% to 70 wt%, and the binder at 2 wt% to 15 wt% with respect to a total content (e.g., amount) of the aerogel layer.

In one or more embodiments, the aerogel layer may include the fibrous support at 25 wt% to 60 wt%, the aerogel at 30 wt% to 70 wt%, the binder at 2 wt% to 15 wt%, and the dispersant at 0.1 wt% to 5 wt% with respect to a total content (e.g., amount) of the aerogel layer.

One or more embodiments of the present disclosure provides a method of manufacturing a battery insulation sheet, the method including coating a substrate with an aerogel composition, and drying the aerogel composition coated on the substrate to form an aerogel layer, wherein the aerogel layer includes a fibrous support; an aerogel; and a functional material including a binder, a dispersant, or a combination thereof, and satisfies Formula 1 below.

$$\text{Formula 1}$$

$$50 \leq A \leq 100{,}000, \ A = T_i / D_s$$

In Formula 1, $T_i$ denotes a thickness of the aerogel layer, and $D_s$ denotes an average diameter of the fibrous support.

In one or more embodiments of the present disclosure, a method of preparing the aerogel composition may include mixing the functional material including the binder, the dispersant, or the combination thereof with a solvent to prepare a solvent mixture; mixing the solvent mixture and the aerogel to prepare an aerogel mixture; and mixing the aerogel mixture and the fibrous support to prepare the aerogel composition.

In one or more embodiments, the solvent may be at least one selected from a group consisting of a polar solvent and a non-polar solvent.

A battery insulation sheet according to one or more embodiments includes an aerogel layer having a shape in which a surface of a fibrous support is coated with an aerogel, the battery insulation sheet can have an excellent or suitable heat insulation property and compressive property, manufacturing process costs thereof can be low, and at the same time, dust of an aerogel can be prevented or substantially prevented from being generated during a manufacturing process or during actual use.

## BRIEF DESCRIPTION OF DRAWINGS

FIG. 1 is a schematic diagram illustrating a battery insulation sheet formed between a plurality of cells according to one or more embodiments of the present disclosure.

FIGS. 2 and 3 are schematic diagrams each illustrating a structure of a battery insulation sheet according to embodiments of the present disclosure.

FIG. 4 shows scanning electron microscope (SEM) images of a cross section of a battery insulation sheet of Example 1.

## DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Unless otherwise noted, like reference numerals denote like elements throughout the attached drawings and the written description, and thus, duplicative descriptions thereof may not be provided. In the drawings, the relative sizes of elements, layers, and regions may be exaggerated for clarity.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

Spatially relative terms, such as "lower," "under," "upper," and the like, may be used herein for ease of explanation to describe one element or feature's relationship to another element(s) or feature(s) referring to the figures. It will be understood that the spatially relative terms are intended to encompass different orientations of the device in use or in operation, in addition to the orientation depicted in the figures. The device may be otherwise oriented (e.g., rotated 90 degrees or at other orientations) and the spatially relative descriptors used herein should be interpreted accordingly.

It will be understood that when an element or layer is referred to as being "on" another element or layer, it can be directly on the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

Expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

In the present disclosure, when particles are spherical, "diameter" indicates a particle diameter or an average particle diameter, and when the particles are non-spherical, the "diameter" indicates a major axis length or an average major axis length. The diameter (or size) of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

A heat insulating material is a material that prevents or reduces the transfer of heat from a high heat place to a low heat place and is utilized not only in refrigerators, refrigeration warehouses, and building construction, but also in various suitable industries including aircraft, electronic components, and vehicle industries.

Such a heat insulating material should have excellent or suitable heat insulation performance through low thermal conductivity and are also desired or required to have mechanical strength for continuously maintaining such a heat insulation property.

An aerogel may be a transparent or semi-transparent high-tech material having a nano-porous structure. Due to characteristics such as very low density and low thermal conductivity, the aerogel has high potential as a heat insulating material and is also evaluated as a very efficient super heat insulating material that is usable in various suitable industrial fields.

In addition, the biggest advantage of the aerogel is that the aerogel has lower thermal conductivity than organic heat insulating materials in the related art, such as expanded polystyrene foam (styrofoam), and the aerogel may solve problems, such as organic heat insulating materials being vulnerable to fire and generating harmful gas in case of a fire, which is fatal weakness of the organic heat insulating materials.

However, in general, the aerogel is very weak in strength due to its high brittleness and thus is easily broken even with a small impact, and it is difficult to process the aerogel to have a very thin thickness and shape. Thus, despite excellent or suitable heat insulation performance, it is very difficult to prepare a heat insulating material using the aerogel alone.

A battery insulation sheet according to the present invention is a battery insulation sheet including a substrate and an aerogel layer formed on the substrate. The aerogel layer includes or consists of a fibrous support; an aerogel; and a functional material including a binder, a dispersant, or a combination thereof, and satisfies Formula 1 below.

Formula 1

$$50 \le A \le 100{,}000 \text{ with } A = T_i/D_s$$

In Formula 1, $T_i$ denotes a thickness of the aerogel layer, and $D_s$ denotes a diameter of (e.g., an average diameter of) the fibrous support.

The battery insulation sheet formed in such a structure may have excellent or suitable heat insulation and compressive properties, manufacturing process costs thereof may be low, and at the same time, dust of the aerogel may be prevented or substantially prevented from being generated during a manufacturing process or during actual use. In one or more embodiments, in the aerogel layer, a surface of the fibrous support is coated with the aerogel, the aerogel and the fibrous support are uniformly distributed, and a binding strength between the aerogel and the fibrous support is high, thereby reducing dust generation due to aerogel detachment.

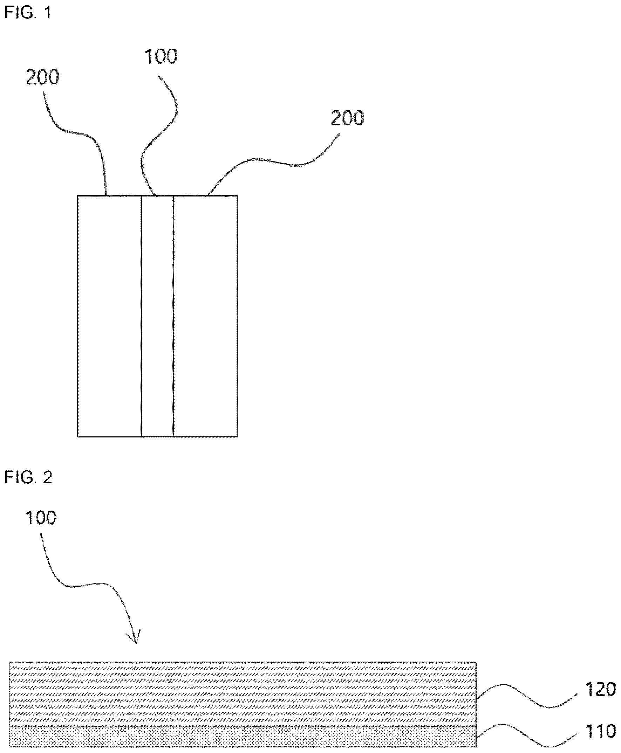

FIG. 1 is a schematic diagram illustrating a battery insulation sheet formed between a plurality of cells according to one or more embodiments of the present disclosure.

Referring to FIG. 1, a battery insulation sheet 100 may be formed between cells 200 in a battery module including a plurality of cells 200. Here, upper and lower surfaces (described in right side and left side in the FIG 1) of the battery insulation sheet 100 may each be disposed to face one of adjacent cells 200. The battery insulation sheet 100 is formed between the plurality of cells 200, a flame is blocked in the cell in advance to suppress or reduce the propagation of the flame to other cells as much as possible, thereby providing a battery module having further raised or improved safety and a battery pack including the same.

FIG. 2 is a schematic diagram illustrating a structure of a battery insulation sheet according to one or more embodiments of the present disclosure.

Referring to FIG. 2, the battery insulation sheet 100 includes a substrate 110, and an aerogel layer 120 formed on the substrate 110, and upper and lower surfaces of the battery insulation sheet 100 may each be disposed to face one of adjacent cells 200.

Because the aerogel layer 120 is formed on the substrate 110 using an aerogel composition, the battery insulation sheet 100 may have an improved compressive property as well as an improved heat insulation property, and when the battery insulation sheet is manufactured or installed inside a device, dust generated by exfoliation of an aerogel can be prevented or substantially prevented.

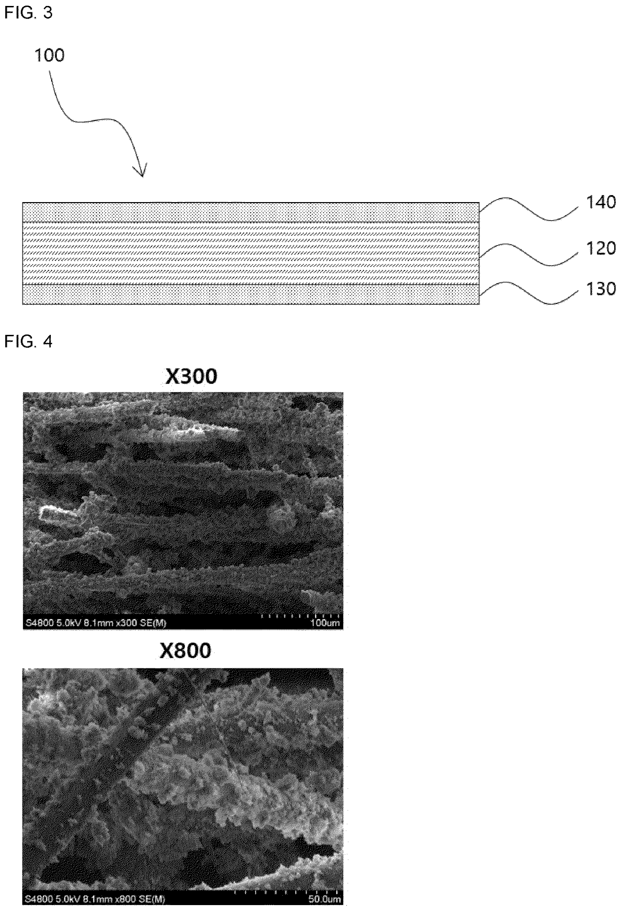

FIG. 3 is a schematic diagram illustrating a structure of a battery insulation sheet according to one or more embodiments of the present disclosure.

Referring to FIG. 3, a battery insulation sheet 100 may have a structure including a first substrate 130, an aerogel layer 120 formed on the first substrate 130, and a second substrate 140 formed on the aerogel layer 120. Here, each of the first substrate 130 and the second substrate 140 may be disposed to face an adjacent cell 200. The first substrate 130 and the second substrate 140 may be made of the same material or different materials.

In Formula 1, a value of A is in a range of 50 to 100,000, preferably 100 to 30,000, or more preferably 200 to 10,000. When the aerogel layer satisfies the value of A within the above ranges, a ratio of a thickness of the aerogel layer to a diameter of the fibrous support (e.g., an average diameter of the fibrous support) may be controlled to firmly form a structure of the aerogel layer, and in this case, when heat propagates between a plurality of cells, it may be easy to withstand explosion-induced pressure. In addition, through control of the ratio of the thickness of the aerogel layer to the diameter of the fibrous support, the coating property of the aerogel layer can be improved, and an insulation sheet can be easily installed between a plurality of cells.

The substrate may include, for example, various suitable substrates made of a resin, a metal, an inorganic material other than metals, or a composite thereof. In addition, the substrate may be in the form of a film, a thin film, or a sheet, and the form thereof is not particularly limited.

The resin may include, for example, at least one of (e.g., at least one selected from the group consisting of) polyethylene (PE), polypropylene (PP), polystyrene, polyethylene terephthalate, and/or polyamide.

The metal may include, for example, at least one of (e.g., at least one selected from the group consisting of) copper, nickel, cobalt, iron, chromium, vanadium, palladium, ruthenium, rhodium, molybdenum, tungsten, iridium, silver, gold, and/or platinum. When a substrate made of a metal material is utilized, the substrate may be subjected to anti-corrosion treatment, insulation treatment, and/or the like if necessary or desired.

The inorganic material may include at least one of (e.g., at least one selected from the group consisting of) calcium carbonate ($CaCO_s$), talc, and/or mica.

In one or more embodiments, the substrate may include an inorganic material. In one or more embodiments, the substrate may include mica. In these embodiments, the heat insulation property, durability, and/or the like of an insulation sheet can be improved.

The substrate may have a thickness of 0.01 mm to 5 mm, preferably 0.05 mm to 3 mm, or more preferably 0.1 mm to 1 mm. The aerogel layer may be formed on the substrate having a thickness within the above ranges, thereby constituting an insulation sheet.

In the battery insulation sheet, the aerogel layer includes a fibrous support, an aerogel, and a functional material including a binder, a dispersant, or a combination thereof.

The aerogel layer may have a thickness of 1 mm to 10 mm, preferably 1 mm to 5 mm, or more preferably 1 mm to 3 mm. The aerogel layer may be formed on the substrate having a thickness within the above ranges, thereby manufacturing an insulation sheet having excellent or suitable heat insulation and compressive properties.

Because the fibrous support is included in the aerogel layer, it is possible to improve the durability of a battery insulation sheet.

The fibrous support may include a fiber (e.g., fibers) utilized as a support for heat insulating materials of the related art. For example, the fibrous support may include at least one of (e.g., at least one selected from the group consisting of) a natural fiber, a silica fiber, a glass fiber, a carbon fiber, a graphite fiber, a mineral fiber, and/or a polymer fiber. In one or more embodiments, the fibrous support may include a glass fiber, but the present disclosure is not limited thereto.

The natural fiber may include, for example, at least one of (e.g., at least one selected from the group consisting of) hemp, jute, flax, coir, kenaf, and/or cellulose.

The mineral fiber may be, for example, a mineral fiber including at least one of (e.g., at least one selected from the group consisting of) basalt, wollastonite, alumina, silica, slag, and/or rock.

The polymer fiber may include, for example, at least one of (e.g., at least one selected from the group consisting of) nylon, polyimide, polyamide, polybenzimidazole, polybenzoxazole, polyamideimide, polyethyleneterephthalate, polybutylene terephthalate, polyester, polyethylene (PE), and/or polypropylene (PP). In one or more embodiments, the polymer fiber may include at least one of (e.g., at least one selected from among) polyimide, polyamide, and/or polybenzimidazole.

The fibrous support may be, for example, in the form of wool or chopped strands.

The fibrous support may have, for example, a diameter of (e.g., an average diameter of) 0.1 $\mu$m to 20 $\mu$m, preferably 0.1 $\mu$m to 15 $\mu$m, more preferably 0.1 $\mu$m to 5 $\mu$m, most preferably 1 $\mu$m to 15 $\mu$m, or in particular 3 $\mu$m to 10 $\mu$m. Because the aerogel layer includes the fibrous support having a diameter within the above ranges, a structure of the aerogel layer can be strengthened, and manufacturing costs can be reduced.

The fibrous support may have, for example, a length of (e.g., an average length of) 50 $\mu$m to 1,000 $\mu$m, preferably 70 $\mu$m to 800 $\mu$m, or more preferably 100 $\mu$m to 600 $\mu$m. Because the aerogel layer includes the fibrous support having a length within the above ranges, the aerogel layer can be firmly formed, and durability can be improved.

Generally, the contents of the fibrous support, the aerogel, and the functional material may add up to 100 wt% of the aerogel layer. The content (e.g., amount) of the fibrous support (e.g., the amount of the fibrous support) may be in a range of 5 wt% to 70 wt%, preferably 25 wt% to 60 wt%, or more preferably 30 wt% to 50 wt% with respect to the total content (e.g., amount) of the aerogel layer. It is possible to improve the durability of a battery insulation sheet including the aerogel layer that includes the fibrous support within the above ranges.

The aerogel may have a Brunauer-Emmett-Teller (BET) specific surface area of 500 $m^2$/g to 1,000 $m^2$/g. For example, the aerogel may have a BET specific surface area of 500 $m^2$/g to 950 $m^2$/g, 550 $m^2$/g to 950 $m^2$/g, or 600 $m^2$/g to 900 $m^2$/g. Because the aerogel layer includes the aerogel having a BET specific surface area value within the above ranges, it is possible to provide an insulation sheet capable of effectively preventing or reducing heat transfer and heat propagation between a plurality of cells.

The aerogel may have a particle diameter (e.g., an average particle diameter) of 5 $\mu$m to 200 $\mu$m, preferably 10 $\mu$m to 100 $\mu$m, or more preferably 20 $\mu$m to 50 $\mu$m. Because the aerogel layer includes the aerogel having a particle diameter within the above ranges, a heat insulation property is improved, thereby delaying heat transfer between a plurality of cells.

The content (e.g., amount) of the aerogel may be in a range of 10 wt% to 90 wt%, preferably 30 wt% to 70 wt%, or more preferably 40 wt% to 60 wt% with respect to the total content (e.g., amount) of the aerogel layer. When a battery insulation sheet is manufactured with an aerogel composition including the aerogel within the above ranges, the heat insulation property of the battery insulation sheet can be improved.

In one or more embodiments, the binder may include an aqueous polymer binder. For example, the aqueous polymer binder may include at least one of (e.g., at least one selected from the group consisting of) an aqueous polymer, an anionic water-soluble polymer, a cationic water-soluble polymer, and/or a water-dispersible polymer.

The aqueous polymer may include, for example, at least one of (e.g., at least one selected from the group consisting of) polyvinyl alcohol, polyethylene oxide, polyacrylamide, and/or polyvinylpyrrolidone.

The anionic water-soluble polymer may include at least one of (e.g., at least one selected from the group consisting of) polymers having functional groups of a carboxylic acid, a sulfonic acid, a sulfuric acid ester, a phosphoric acid ester, and/or a salt thereof. For example, the anionic water-soluble polymer may be a polymer having a carboxylic acid functional group, and in one or more embodiments, the anionic water-soluble polymer may include a polymaleic acid.

The cationic water-soluble polymer may include at least one of (e.g., at least one selected from the group consisting of) polymers having functional groups of amine, ammonium, phosphonium, sulfonium, and/or a salt thereof. For example, the cationic water-soluble polymer may be a polymer having an amine functional group, and in one or more embodiments, the cationic water-soluble polymer may include at least one of (e.g., at least one selected from the group consisting of) polyethylene amine and/or polyamine,.

The water-dispersible polymer may include at least one of (e.g., at least one selected from the group consisting of) water-dispersible polyurethane and/or water-dispersible polyester.

The binder may include an aqueous polymer and a water-dispersible polymer. For example, the binder may include an aqueous polymer having a binder characteristic and a dispersion property and water-dispersible polyurethane having a fire resistance property, and in one or more embodiments, the binder may include polyvinyl alcohol and water-dispersible polyurethane.

A weight ratio of the aqueous polymer and the water-dispersible polymer may be in a range of 1:1 to 1:5, 1:1 to 1:4, or 1:2 to 1:3. When the aqueous polymer and the water-dispersible polymer are mixed and utilized in a weight ratio within the above ranges, it is possible to further improve fire resistance and mechanical properties as well as a heat insulation property, a dusting property, and a compressive property of an insulation sheet.

The content (e.g., amount) of the binder may be in a range of 0.5 wt% to 20 wt%, 2 wt% to 15 wt%, or 8 wt% to 15 wt% with respect to the total content (e.g., amount) of the aerogel layer. When a battery insulation sheet is manufactured with the aerogel composition including the binder within the above ranges, it is possible to improve the dusting property of the battery insulation sheet.

In one or more embodiments, the dispersant may include at least one of (e.g., at least one selected from the group consisting of) a surfactant and/or a phosphate-based salt. In one or more embodiments, the dispersant may include at least one of (e.g., at least one selected from among) a nonionic surfactant, an anionic surfactant, an amphoteric surfactant, and/or a natural surfactant such as lecithin, and phosphate.

When the dispersant is further included, the dispersion of the aerogel in a composition is further improved, thereby uniformly dispersing the fibrous support and the aerogel.

The content (e.g., amount) of the dispersant may be in a range of 0.1 wt% to 6 wt%, 0.1 wt% to 5 wt%, or 0.1 wt% to 3 wt% with respect to the total content (e.g., amount) of the aerogel layer. When the dispersant is included within the above ranges, it is possible to manufacture a battery insulation sheet having excellent or suitable insulation, compressive property, and dusting property.

In one or more embodiments, the binder and the dispersant may be included in a weight ratio of 1:0.001 to 1:0.67, 1:0.001 to 1:0.5, or 1:0.001 to 1:0.3. When the binder and the dispersant are mixed in a weight ratio within the above ranges, the aerogel may be present in a form more uniformly dispersed in the aerogel layer.

In one or more embodiments, with respect to the total content (e.g., amount) of the aerogel layer, the fibrous support may be included at 5 wt% to 70 wt%, the aerogel may be included at 10 wt% to 90 wt%, and the functional material may be included at 0.5 wt% to 20 wt%.

As an example, the aerogel layer may include the fibrous support at 25 wt% to 60 wt%, the aerogel at 30 wt% to 70 wt%, and the binder at 2 wt% to 15 wt% with respect to the total content (e.g., amount) of the aerogel layer.

In one or more embodiments, the aerogel layer may include the fibrous support at 30 wt% to 50 wt%, the aerogel at 40 wt% to 60 wt, and the binder at 8 wt% to 15 wt% with respect to the total content (e.g., amount) of the aerogel layer. When the aerogel layer is formed within the above ranges, it is possible to improve the dispersibility of the aerogel, implement an excellent or suitable heat insulation property and concurrently (e.g., simultaneously) improve durability, and it is possible to improve a binding strength between the fibrous support and the aerogel, thereby preventing or substantially preventing the generation of dust.

In one or more embodiments, the aerogel layer may include the fibrous support at 25 wt% to 60 wt%, the aerogel at 30 wt% to 70 wt%, the binder at 2 wt% to 15 wt%, and the dispersant at 0.1 wt% to 5 wt% with respect to the total content (e.g., amount) of the aerogel layer.

In one or more embodiments, the aerogel layer may include the fibrous support at 30 wt% to 50 wt%, the aerogel at 40 wt% to 60 wt%, the binder at 5 wt% to 10 wt%, and the dispersant at 0.1 wt% to 3 wt% with respect to the total content (e.g., amount) of the aerogel layer. When the aerogel layer is formed within the above ranges, it is possible to improve the dispersibility of the aerogel, implement an excellent or suitable heat insulation property, and concurrently (e.g., simultaneously) improve durability, and it is possible to improve a binding strength between the fibrous support and the aerogel, thereby preventing or substantially preventing the generation of dust.

In one or more embodiments, the aerogel layer may have a single layer structure or a multi-layer structure. When the aerogel layer has a multi-layer structure, the aerogel layer may be formed as 2 to 10 layers, 2 to 7 layers, or 2 to 5 layers.

A method of manufacturing a battery insulation sheet includes coating a substrate with an aerogel composition, and drying the aerogel composition applied on the substrate to form an aerogel layer, wherein the aerogel layer includes or consists of a fibrous support; an aerogel; and a functional material including a binder, a dispersant, or a combination thereof, and satisfies Formula 1 below. Here, detailed descriptions of the substrate and the aerogel layer is the same as those described above. The substrate may be the substrate in FIG. 2 or any one of the first substrate and the second substrate in FIG. 3.

## Formula 1

$$50 \leq A \leq 100{,}000, \ A = T_i / D_s$$

In Formula 1, $T_i$ denotes a thickness of the aerogel layer, and $D_s$ denotes a diameter of the fibrous support (e.g., the average diameter of the fibrous support).

A method of preparing the aerogel composition may include mixing the functional material including the binder, the dispersant, or the combination thereof with a solvent to prepare a solvent mixture, mixing the solvent mixture and the aerogel to prepare an aerogel mixture, and mixing the aerogel mixture and the fibrous support to prepare the aerogel composition.

In the mixing of the functional material in the solvent to prepare the solvent mixture, the binder may be mixed with the solvent, or the binder and the dispersant may be mixed with the solvent. Here, detailed descriptions of the binder and the dispersant may be the same as those described above.

The solvent may include at least one of (e.g., at least one selected from the group consisting of) a polar solvent and/or a non-polar solvent.

The polar solvent may include at least one of (e.g., at least one selected from the group consisting of) water and/or an alcohol-based solvent.

The water may include, for example, purified water, ultrapure water, or a combination thereof.

The alcohol-based solvent may include, for example, at least one of (e.g., at least one selected from the group consisting of) methanol, ethanol, propanol, pentanol, butanol, hexanol, ethylene glycol, propylene glycol, diethylene glycol, and/or glycerol.

The non-polar solvent may include a hydrocarbon-based solvent. For example, the hydrocarbon-based solvent may include at least one of (e.g., at least one selected from the group consisting of) hexane, pentane, heptane, toluene, and/or benzene. The hydrocarbon-based solvent is, for example, an alkane solvent such as hexane or a mixture including the alkane solvent.

The solvent may include water. When the water is utilized as the solvent, raw material costs and post-processing costs can be effectively reduced. However, when the water is utilized as a solvent, mixing with a hydrophobic aerogel is not easy, and in one or more embodiments, a mixing operation design, a mixing condition, the addition and content (e.g., amount) of a binder and a dispersant, and/or the like have been controlled to uniformly disperse the aerogel. In this way, when the aerogel is uniformly dispersed in a composition, without using a large amount of binder, it is possible to form a thin battery insulation sheet having excellent or suitable heat insulation and compressive properties and a low dusting property.

The solvent may be included such that a weight ratio of a content (e.g., amount) of the solvent to the total solid content (e.g., amount) of the aerogel composition is in a range of 1:1 to 1:90. For example, the solvent may be included such that the weight ratio of the content (e.g., amount) of the solvent to the total solid content (e.g., amount) is in a range of 1:50 to 1:70, 1:20 to 1:30, or 1:2 to 1:10. The weight ratio of the content (e.g., amount) of the solvent to the total solid content (e.g., amount) may be controlled within the above ranges to control viscosity and coat the aerogel layer.

In the mixing of the solvent mixture and the aerogel to prepare the aerogel mixture, the aerogel may be introduced in the form of powder, and a detailed description of the aerogel may be the same as the above description.

In the mixing of the aerogel mixture and the fibrous support to prepare the aerogel composition, a specific description of the fibrous support may be the same as the above description.

In one or more embodiments, the aerogel composition may further include a silane-based compound. The silane-based compound may include, for example, at least one of (e.g., at least one selected from the group consisting of) 3-(trimethoxysilyl)propylmethacrylate, methyltriethoxysilane, methyltrimethoxysilane, ethyltrimethoxysilane, octadecyltrimethoxysilane, ethyltriethoxysilane, and/or 3-glycidoxypropyltrimethoxysilane. When the silane-based compound is further included, dispersibility can be further improved.

In each of the mixing of the functional material including the binder, the dispersant, or the combination thereof with the solvent to prepare the solvent mixture, the mixing of the solvent mixture and the aerogel to prepare the aerogel mixture, and the mixing of the aerogel mixture and the fibrous support to prepare the aerogel composition, during mixing, the mixing may be performed using a mixer. For example, the mixer may include a planetary mixer, a thinky mixer, and/or the like.

In one or more embodiments, when the solvent mixture and the aerogel are mixed, the planetary mixer may be utilized. When the solvent mixture and the aerogel are mixed using the planetary mixer, the aerogel may be uniformly dispersed in the solvent.

The planetary mixer may be a device that is utilizable to mix or stir different materials to prepare a homogeneous mixture. The planetary mixer may include a blade capable of performing a planetary motion.

In one or more embodiments, the planetary mixer may include one or more of one or more planetary blades and/or one or more high-speed dispersion blades. In one or more embodiments, the planetary mixer may include one or more planetary blades and one or more high-speed dispersion blades.

The planetary blades and the high-speed dispersion blades continuously rotate about axes thereof. A rotation speed may be expressed in a unit of rotations per minute (rpm).

In one or more embodiments, the planetary mixer may include a first blade and a second blade having different rotational axes. For example, the first blade may be a low-speed blade and the second blade may be a high-speed blade. Here, a low speed and a high speed are relative rotation speeds between the first blade and the second blade. In one or more embodiments, the first blade may be an open blade, and the second blade may be a despa blade.

A rotation speed of the first blade may be, for example, in a range of 10 rpm to 100 rpm, 10 rpm to 60 rpm, or 30 rpm to 70 rpm. In addition, a rotation speed of the second blade may be, for example, in a range of 100 rpm to 2,000 rpm, 100 rpm to 1,000 rpm, 300 rpm to 1,700 rpm, or 500 rpm to 1,700 rpm.

When the functional material is added to the solvent and mixed, the rotation speed of the first blade of the mixer may be in a range of 10 rpm to 60 rpm, 20 rpm to 50 rpm, or 30 rpm to 40 rpm, and the rotation speed of the second blade may be in a range of 300 rpm to 1,700 rpm, 600 rpm to 1,000 rpm, or 700 rpm to 800 rpm. When the solvent and the functional material are mixed as described above, the solvent mixture in which the binder, the dispersant, or the combination thereof is uniformly dispersed may be prepared to more easily mix the aerogel in a subsequent operation.

When the solvent mixture and the aerogel are mixed, the rotation speed of the first blade of the mixer may be in a range of 30 rpm to 70 rpm, 40 rpm to 70 rpm, or 60 rpm to 70 rpm, and the rotation speed of the second blade may be in a range of 500 rpm to 1,700 rpm, 600 rpm to 1,600 rpm, or 800 rpm to 1,500 rpm. When the aerogel is added to the solvent mixture and mixed as described above, the aerogel can be prevented or substantially prevented from being agglomerated, thereby inducing uniform dispersion.

When the aerogel mixture and the fibrous support are mixed, the rotation speed of the first blade of the mixer may be in a range of 10 rpm to 60 rpm, 20 rpm to 50 rpm, or 30 rpm to 40 rpm, and the rotation speed of the second blade may be in a range of 300 rpm to 1,700 rpm, 400 rpm to 1,500 rpm, or 800 rpm to 1,200 rpm. As described above, when the aerogel mixture and the fibrous support are mixed, bubbles in a composition are removed, viscosity is adjusted, and the fibrous support is easily dispersed between the uniformly dispersed aerogels, so that the aerogel may be present in a form surrounding the fibrous support in the composition. Here, the binder may be present between the aerogel and the fibrous support to improve a binding strength between the aerogel and the fibrous support.

The coating may be performed by a conventional method of coating a substrate with an aerogel slurry.

The coating may be repeated one or more times.

The drying may be performed under a temperature condition of, for example, 25°C to 100°C, 45°C to 90°C, or 60°C to 85°C. Because the drying is performed under the above temperature conditions, the substrate and the aerogel layer can be prevented or substantially prevented from being detached from each other, a strong aerogel layer can be formed on the substrate without a separate adhesive member or adhesive, and a coating layer can be formed in a shape in which an aerogel is coated around a plurality of dispersed fibrous supports.

In one or more embodiments, the method of manufacturing a battery insulation sheet may further include, before the drying, stacking a substrate on the applied aerogel composition. In this case, a battery insulation sheet may be manufactured in a structure in which, without an adhesive layer, a plurality of substrates, for example, a first substrate and a second substrate are formed on both surfaces of the aerogel layer.

According to the method of manufacturing a battery insulation sheet according to one or more embodiments, a battery insulation sheet can be manufactured through a simple method of coating a substrate with an aerogel composition and drying the aerogel composition without using a separate adhesive or providing an adhesive layer. An aerogel is uniformly dispersed and a compressive property is excellent or suitable so that, even with a thin thickness, an excellent or suitable heat insulation property and a low dusting property can be implemented.

When the aerogel layer is formed, the aerogel layer may optionally further include an additive such as a wetting agent, an emulsifier, a compatibilizer, a viscosity modifier, a pH modifier, a stabilizer, an antioxidant, an acidic or basic capture reagent, a metal deactivator, an antifoaming agent, an antistatic agent, a thickener, an adhesion promoter, a binding agent, a flame retardant, an impact modifier, a pigment, a dye, a colorant, and/or a deodorizer.

Hereinafter, specific Examples of the present disclosure will be described. Meanwhile, Examples to be described are just provided for illustrating or explaining the present disclosure, and accordingly, the present disclosure is not limited to the following Examples. Contents which are not described here may be fully inferred by those skilled in the art, and thus descriptions thereof may be omitted.

**Manufacturing of battery insulation sheet**

**Example 1**

**1. Preparation of aerogel composition**

Polyvinyl alcohol (manufactured by Sigma-Aldrich Co., LLC) as a binder was added to ultrapure water as a solvent and mixed under conditions of 30 rpm for an open blade and 700 rpm for a despa blade to prepare a solvent mixture. Then, an aerogel having a BET value of 800 m$^2$/g was added to the solvent mixture and mixed under conditions of 70 rpm for an open blade and 1,500 rpm for a despa blade to prepare an aerogel mixture. Glass wool as a fibrous support having a diameter (e.g., an average diameter) of 0.12 μm to 5 μm was added to the aerogel mixture and mixed at 30 rpm for an open blade and 1,200 rpm for a despa blade to prepare an aerogel composition. Here, during mixing, a planetary mixer (PT-005 manufactured by DNTEK Co., Ltd.) was utilized.

It was confirmed that a solid content (e.g., amount) of the prepared aerogel composition included the aerogel at 50 wt%, the glass wool at 40 wt%, and the polyvinyl alcohol at 10 wt%.

**2. Manufacturing of battery insulation sheet**

The prepared aerogel composition as a slurry was applied on a mica sheet (muscovite) (manufactured by Pamica Electric Material (Hubei) Co., Ltd.) having a thickness of 0.1 mm, and then the mica sheet having a thickness of 0.1 mm was stacked in a sandwich type or kind and then coated through a roll rolling method. Then, the stacked mica sheet was dried at a temperature of 60°C for 24 hours to form an aerogel layer and manufacture a battery insulation sheet. It was confirmed that the aerogel layer had a thickness of 1.18 mm and the manufactured battery insulation sheet had a total thickness of 1.38 mm.

**Example 2**

A battery insulation sheet was manufactured in substantially the same manner as in Example 1, except that, when an aerogel composition is prepared, input amounts of raw materials in Example 1 were adjusted to prepare an aerogel composition with a solid content (e.g., amount) including an aerogel at 60 wt%, glass wool at 25 wt%, and polyvinyl alcohol at 15 wt%.

**Example 3**

A battery insulation sheet was manufactured in substantially the same manner as in Example 1, except that, when an aerogel composition was prepared, input amounts of raw materials in Example 1 were adjusted to prepare an aerogel composition with a solid content (e.g., amount) including an aerogel at 65 wt%, glass wool at 25 wt%, and polyvinyl alcohol at 10 wt%.

**Example 4**

A battery insulation sheet was manufactured in substantially the same manner as in Example 1, except that, when an aerogel composition was prepared, input amounts of raw materials in Example 1 were adjusted to prepare an aerogel composition with a solid content (e.g., amount) including an aerogel at 45 wt%, glass wool at 50 wt%, and polyvinyl alcohol at 5 wt%.

**Example 5**

A battery insulation sheet was manufactured in substantially the same manner as in Example 1, except that, when an aerogel composition was prepared, input amounts of raw materials in Example 1 were adjusted to prepare an aerogel composition with a solid content (e.g., amount) including an aerogel at 50 wt%, glass wool at 49.7 wt%, and polyvinyl alcohol at 0.3 wt%.

**Example 6**

A battery insulation sheet was manufactured in substantially the same manner as in Example 1, except that, when an aerogel composition was prepared, input amounts of raw materials in Example 1 were adjusted to prepare an aerogel composition with a solid content (e.g., amount) including an aerogel at 40 wt%, glass wool at 35 wt%, and polyvinyl alcohol at 25 wt%.

**Example 7**

A battery insulation sheet was manufactured in substantially the same manner as in Example 1, except that an aerogel composition was prepared using glass wool having a diameter (e.g., an average diameter) of 0.1 $\mu$m to 3 $\mu$m as a fibrous support in Example 1, and a thickness of an aerogel layer in Example 1 was adjusted to 1.3 mm when the battery insulation sheet is manufactured.

**Example 8**

A battery insulation sheet was manufactured in substantially the same manner as in Example 1, except that an aerogel composition was prepared using glass wool having a diameter (e.g., an average diameter) of 10 $\mu$m to 15 $\mu$m as a fibrous support in Example 1, and a thickness of an aerogel layer in Example 1 was adjusted to 1.3 mm when the battery insulation sheet is manufactured.

**Example 9**

A battery insulation sheet was manufactured in substantially the same manner as in Example 1, except that, when an aerogel composition was prepared, water-dispersible polyurethane was utilized instead of polyvinyl alcohol as a binder in Example 1.

**Example 10**

**1. Preparation of aerogel composition**

Polyvinyl alcohol (manufactured by Sigma-Aldrich Co., LLC) as a binder and a surfactant as a dispersant (Triton-X100 manufactured by Sigma-Aldrich Co., LLC) were added to ultrapure water as a solvent and mixed under conditions of 30 rpm for an open blade and 700 rpm for a despa blade to prepare a solvent mixture. Then, an aerogel having a BET value of 800 $m^2$/g was added to the solvent mixture and mixed under conditions of 70 rpm for an open blade and 1,500 rpm for a despa blade to prepare an aerogel mixture. Glass wool as a fibrous support having a diameter (e.g., an average diameter) of 0.12 $\mu$m to 5 $\mu$m was added to the aerogel mixture and mixed under conditions of 30 rpm for an open blade and 1,200 rpm for a despa blade to prepare an aerogel composition. Here, during mixing, a planetary mixer (PT-005 manufactured by DNTEK Co., Ltd.) was utilized.

It was confirmed that a solid content (e.g., amount) of the prepared aerogel composition included the aerogel at 50 wt%, the glass wool at 40 wt%, the polyvinyl alcohol at 9.9 wt%, and the dispersant at 0.1 wt%.

**2. Manufacturing of battery insulation sheet**

The prepared aerogel composition as a slurry was applied on a mica sheet (muscovite) (manufactured by Pamica Electric Material (Hubei) Co., Ltd.) having a thickness of 0.1 mm, and then the mica sheet having a thickness of 0.1 mm was stacked in a sandwich type or kind and then coated through a roll rolling method. Then, the stacked mica sheet was dried at a temperature of 60°C for 24 hours to form an aerogel layer and manufacture a battery insulation sheet. It was confirmed that the aerogel layer had a thickness of 1.18 mm and the manufactured battery insulation sheet had a total thickness of 1.38 mm.

**Example 11**

**1. Preparation of aerogel composition**

Polyvinyl alcohol (manufactured by Sigma-Aldrich Co., LLC) as a binder, water-dispersible polyurethane, and a surfactant as a dispersant (Triton-X100 manufactured by Sigma-Aldrich Co., LLC) were added to ultrapure water as a solvent and mixed under conditions of 30 rpm for an open blade of and 700 rpm for a despa blade to prepare a solvent mixture. Then, an aerogel having a BET value of 800 $m^2$/g was added to the solvent mixture and mixed under conditions of 70 rpm for an open blade and 1,500 rpm for a despa blade to prepare an aerogel mixture. Glass wool as a fibrous support having a diameter (e.g., an average diameter) of 0.12 $\mu$m to 5 $\mu$m was added to the aerogel mixture and mixed under conditions of 30 rpm for an open blade and 1,200 rpm for a despa blade to prepare an aerogel composition. Here, during mixing, a planetary mixer (PT-005 manufactured by DNTEK Co., Ltd.) was utilized.

It was confirmed that a solid content (e.g., amount) of the prepared aerogel composition included the aerogel at 50 wt%, the glass wool at 40 wt%, the polyvinyl alcohol at 3 wt%, the water-dispersible polyurethane at 6.9 wt%, and the dispersant at 0.1 wt%.

## 2. Manufacturing of battery insulation sheet

The prepared aerogel composition as a slurry was applied on a mica sheet (muscovite) (manufactured by Pamica Electric Material (Hubei) Co., Ltd.) having a thickness of 0.1 mm, and then the mica sheet having a thickness of 0.1 mm was stacked in a sandwich type or kind and then coated through a roll rolling method. Then, the stacked mica sheet was dried at a temperature of 60°C for 24 hours to form an aerogel layer and manufacture a battery insulation sheet. It was confirmed that the aerogel layer had a thickness of 1.18 mm and the manufactured battery insulation sheet had a total thickness of 1.38 mm.

### Comparative Example 1

A battery insulation sheet was manufactured in substantially the same manner as in Example 1, except that an aerogel composition was prepared using glass wool having a diameter (e.g., an average diameter) of 30 μm to 40 μm as a fibrous support in Example 1, and a thickness of an aerogel layer in Example 1 was adjusted to 1.18 mm when the battery insulation sheet is manufactured.

### Comparative Example 2

A battery insulation sheet was manufactured in substantially the same manner as in Example 1, except that an aerogel composition was prepared using glass wool having a diameter (e.g., an average diameter) of 0.01 μm to 0.015 μm as a fibrous support in Example 1, and a thickness of an aerogel layer in Example 1 was adjusted to 1.18 mm when the battery insulation sheet is manufactured.

### Experimental Examples

### Experimental Example 1: Scanning electron microscope (SEM) analysis

A cross section of the aerogel layer of the battery insulation sheet manufactured in Example 1 was observed through Hitachi S-4800 SEM (manufactured by Hitachi, Ltd), and analysis was performed after Pt coating. Results thereof are shown in FIG. 4 below. Specifically, FIG. 4 shows SEM images of the battery insulation sheet according to Example 1 at 300× magnification (×300) and 800× magnification (×800).

Referring to FIG. 4, it can be confirmed that the battery insulation sheet of Example 1 manufactured through a method according to the present disclosure has a unique structure. Specifically, when an aerogel layer is formed through a method in which an aerogel precursor is impregnated in a fiber blanket at a low temperature and reduced pressure, is gelled, and then supercritically dried, there is a limitation on an input amount of aerogel, an amount (e.g., a required amount) is difficult to input, and the aerogel has a structure embedded on a surface of the blanket in a large particle size. Thus, the aerogel is easily separated to generate a large amount of dust. However, referring to FIG. 4, it can be confirmed that a fibrous support is coated with an aerogel, and thus the battery insulation sheet according to the present disclosure may have excellent or suitable heat insulation and compressive properties and a low dusting property.

### Experimental Example 2: Evaluation of heat insulation property

A heat insulation property was evaluated using the insulation sheets manufactured in Examples 1 to 11 and Comparative Examples 1 and 2.

Specifically, each of the insulation sheets was placed between a pair of 1 mm-thick aluminum plates facing each other and placed on a heat press, an upper plate of the heat press was heated to a temperature 350°C, and a lower plate of the heat press was maintained at a start temperature of 40°C without being heated. Then, when 11 minutes have elapsed after a pressure of 20 kN was applied to the lower plate of the heat press, a temperature of the lower plate of the heat press was measured and shown in Table 1 below.

### Experimental Example 3: Evaluation of dusting property

A dusting property was evaluated using the insulation sheets prepared in Examples 1 to 11 and Comparative Examples 1 and 2.

Specifically, a weight of each of the insulation sheets was measured before evaluation. Then, the insulation sheet was placed on a rubber plate, and a total of five points such as vertices and a center of the insulation sheet were regularly hit with a rubber mallet, dust was swept off, and then the weight of the insulation sheet was measured. Subsequently, a weight before a physical impact was compared with a weight after the physical impact to calculate a weight reduction ratio. Results thereof are shown in Table 1 below.

**Experimental Example 4: Evaluation of compressive property**

A compressive property was evaluated using the insulation sheets prepared in Examples 1 to 11 and Comparative Examples 1 and 2.

Specifically, a zero point was set using a universal testing machine (UTM), each insulation sheet was inserted between aluminum plates with a thickness of 1 mm, and then a compression ratio was measured at a compression speed of 0.02 mm/sec from 0 kN to 80 kN. Then, a thickness at 5 kN and a thickness at 40 kN were measured, and a reduction ratio of a thickness was expressed as a compression ratio. Results thereof are shown in Table 1 below.

Table 1

|  |  | Temperature of lower plate (°C) | Weight reduction ratio (%) | Compression ratio (%) |
|---|---|---|---|---|
| Examples | 1 | 85.2 | 1.7 | 46.3 |
|  | 2 | 85.7 | 1.5 | 42.1 |
|  | 3 | 83.6 | 2.3 | 40.3 |
|  | 4 | 86.1 | 2.5 | 45.5 |
|  | 5 | 86.6 | 4.8 | 42.0 |
|  | 6 | 97.6 | 1.7 | 39.9 |
|  | 7 | 85.7 | 2.0 | 43.1 |
|  | 8 | 85.4 | 2.3 | 42.7 |
|  | 9 | 86.6 | 2.8 | 43.6 |
|  | 10 | 84.5 | 1.3 | 47.5 |
|  | 11 | 83.2 | 0.8 | 47.9 |
| Comparative Examples | 1 | 83.0 | 5.7 | 37.5 |
|  | 2 | 82.9 | 7.0 | 36.4 |

Referring to Table 1, in the case of Examples 1 to 11, it could be confirmed that all of the heat insulation property, the dusting property, and the compressive property were excellent or suitable. Here, regarding Examples 1 to 4, changes in heat insulation property, dusting property, and compressive property according to a component content (e.g., amount) of the aerogel composition can be confirmed. In addition, in the case of Example 5, it could be confirmed that the dusting property and the compressive property were slightly lowered according to a change in component of the aerogel composition, but the heat insulation property was improved. In the case of Example 6, it could be confirmed that the heat insulation property and the compressive property were slightly lowered. In addition, regarding Examples 1, 7, and 8, changes in heat insulation property, dusting property, and compressive property according to a value of A can be confirmed. When the value of A is in a range of 200 to 10,000, it can be confirmed that the heat insulation property and the dusting property are excellent or suitable without degradation in compressive property. In addition, in the case of Example 9, because a dispersant could not serve as a fire-resistant binder, it could be seen that the dusting property was slightly reduced, but the heat insulation property was improved. In addition, regarding Example 10 in which a binder and a dispersant were mixed, it could be confirmed that the heat insulation property, the dusting property, and the compressive property were improved. In addition, regarding Example 11, when polyvinyl alcohol that could serve as a dispersant and a water-dispersible polyurethane binder that could not serve as a dispersant were mixed, it could be confirmed that the heat insulation property, the dusting property, and the compressive property were further improved.

In contrast, regarding Comparative Examples 1 and 2, it could be confirmed that, because the value of A was not satisfied (was not suitable), all of the heat insulation property, the dusting property, and the compressive property were considerably lowered.

Therefore, when the aerogel composition according to one or more embodiments was utilized, it could be confirmed that a heat insulation property, a compressive property, and a dusting property were excellent or suitable.

Because a battery insulation sheet according to one or more embodiments includes an aerogel layer that has a shape in which a surface of a fibrous support is coated with an aerogel, the battery insulation sheet can have an excellent or suitable heat insulation property and compressive property, manufacturing process costs thereof can be low, and at the same time, dust of an aerogel can be prevented or substantially prevented from being generated during a manufacturing process or during actual use.

The portable device, vehicle, and/or the battery, e.g., a battery controller, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

**Claims**

1. A battery insulation sheet (100) comprising:

   a substrate (110); and
   an aerogel layer (120) on the substrate (110),
   wherein the aerogel layer (120) comprises a fibrous support; an aerogel; and a functional material comprising a binder, a dispersant, or a combination thereof, and satisfies Formula 1 below:

   Formula 1

   $$50 \leq A \leq 100{,}000 \text{ with } A = T_i/D_s,$$

   wherein, in Formula 1, $T_i$ denotes a thickness of the aerogel layer (120), and $D_s$ denotes an average diameter of the fibrous support.

2. The battery insulation sheet of claim 1, wherein the aerogel layer (120) has a thickness of 1 mm to 10 mm.

3. The battery insulation sheet of claim 1 or 2, wherein the average diameter of the fibrous support is 0.1 $\mu$m to 20 $\mu$m.

4. The battery insulation sheet of any one of the preceding claims, wherein A is in a range of 200 to 10,000.

5. The battery insulation sheet of any one of the preceding claims, wherein a surface of the fibrous support is coated with the aerogel.

6. The battery insulation sheet of any one of the preceding claims, wherein the substrate (110) is at least one selected from a group consisting of a resin, a metal, and an inorganic material other than metals.

7. The battery insulation sheet of any one of the preceding claims, wherein the fibrous support is at least one selected from a group consisting of a natural fiber, a silica fiber, a glass fiber, a carbon fiber, a basalt fiber, and a polymer fiber.

8. The battery insulation sheet of any one of the preceding claims, wherein the aerogel has a Brunauer-Emmett-Teller (BET) specific surface area of 500 m$^2$/g to 1,000 m$^2$/g.

9. The battery insulation sheet any one of the preceding claims, wherein the binder comprises an aqueous polymer binder, and

the aqueous polymer binder is at least one selected from a group consisting of an aqueous polymer, an anionic water-soluble polymer, a cationic water-soluble polymer, and a water-dispersible polymer, wherein an amount of the binder is 0.5 wt% to 20 wt% with respect to a total amount of the aerogel layer.

10. The battery insulation sheet of any one of the preceding claims, wherein the binder comprises an aqueous polymer and a water-dispersible polymer, and

a weight ratio of the aqueous polymer to the water-dispersible polymer is 1: 1 to 1: 5.

11. The battery insulation sheet of any one of the preceding claims, wherein the dispersant is at least one selected from a group consisting of a surfactant and a phosphate-based salt, wherein an amount of the dispersant is 0.1 wt% to 6 wt% with respect to a total amount of the aerogel layer; and/or

wherein a weight ratio of the binder and the dispersant is 1:0.001 to 1:0.67.

12. The battery insulation sheet of any one of the preceding claims, wherein the aerogel layer comprises the fibrous support at 5 wt% to 70 wt%, the aerogel at 10 wt% to 90 wt%, and the functional material at 0.5 wt% to 20 wt% with respect to a total amount of the aerogel layer; or

wherein the aerogel layer comprises the fibrous support at 25 wt% to 60 wt%, the aerogel at 30 wt% to 70 wt%, and the binder at 2 wt% to 15 wt% with respect to a total amount of the aerogel layer; or
wherein the aerogel layer comprises the fibrous support at 25 wt% to 60 wt%, the aerogel at 30 wt% to 70 wt%, the binder at 2 wt% to 15 wt%, and the dispersant at 0.1 wt% to 5 wt% with respect to a total amount of the aerogel layer.

13. A method of manufacturing a battery insulation sheet (100), the method comprising:

coating a substrate (110) with an aerogel composition; and
drying the aerogel composition coated on the substrate (110) to form an aerogel layer (120),
wherein the aerogel (120) layer comprises a fibrous support; an aerogel; and a functional material comprising a binder, a dispersant, or a combination thereof, and satisfies Formula 1 below:

### Formula 1

$$50 \leq A \leq 100{,}000, \ A = T_i / D_s,$$

wherein, in Formula 1, $T_i$ denotes a thickness of the aerogel layer (120), and $D_s$ denotes an average diameter of the fibrous support.

14. The method of claim 13, wherein a method of preparing the aerogel composition comprises:

mixing the functional material comprising the binder, the dispersant, or the combination thereof with a solvent to prepare a solvent mixture;
mixing the solvent mixture and the aerogel to prepare an aerogel mixture; and
mixing the aerogel mixture and the fibrous support to prepare the aerogel composition.

15. The method of claim 14, wherein the solvent is at least one selected from a group consisting of a polar solvent and a non-polar solvent.

FIG. 1

200 100 200

FIG. 2

100

120
110

FIG. 3

100

140

120

130

FIG. 4

**X300**

S4800 5.0kV 8.1mm x300 SE(M)　　　　　100um

**X800**

S4800 5.0kV 8.1mm x800 SE(M)　　　　　50.0um

Europäisches
Patentamt

European
Patent Office

Office européen
des brevets

# EUROPEAN SEARCH REPORT

Application Number

EP 23 19 7839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/181716 A1 (KATAYAMA NAOKI [JP] ET AL) 9 June 2022 (2022-06-09) | 1-8, 11-15 | INV. C04B41/00 |
| Y | * paragraph [0012]; examples 1-17; tables 1,2 * | 9,10 | C04B41/45 C04B41/85 |
|  | ----- |  | H01M10/658 |
| X | US 2015/240076 A1 (ELING BEREND [DE] ET AL) 27 August 2015 (2015-08-27) | 1-15 | B01J13/00 B32B5/02 |
| Y | * paragraphs [0069] - [0089], [0092] - [0096], [0116], [0119], [0125]; examples 1-10 * | 9,10 | B32B15/04 B32B27/06 B32B18/00 |
|  | ----- |  | H01B3/10 |
| A | Cabot: "P100, P200, & P300 AEROGEL PARTICLES", , March 2021 (2021-03), pages 1-2, XP093137367, Retrieved from the Internet: URL:https://www.cabotcorp.cn/~/media/files /product-datasheets/datasheet-aerogel-p300 pdf.pdf [retrieved on 2024-03-04] * the whole document * | 1-15 | ADD. C04B111/00 C04B111/28 |
|  | ----- |  |  |

TECHNICAL FIELDS
SEARCHED       (IPC)

C04B
H01M
B01J
B32B
H05B
H01B

The present search report has been drawn up for all claims

| Place of search | Date of completion of the search | Examiner |
|---|---|---|
| Munich | 4 March 2024 | Bonneau, Sébastien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 19 7839

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2024

| Patent document cited in search report | | Publication date | Patent family member(s) | | Publication date |
|---|---|---|---|---|---|
| US 2022181716 | A1 | 09-06-2022 | CN | 114080719 A | 22-02-2022 |
| | | | JP | 7009534 B2 | 25-01-2022 |
| | | | JP | 2021144879 A | 24-09-2021 |
| | | | US | 2022181716 A1 | 09-06-2022 |
| | | | WO | 2021181951 A1 | 16-09-2021 |
| US 2015240076 | A1 | 27-08-2015 | CN | 104520365 A | 15-04-2015 |
| | | | EP | 2855568 A1 | 08-04-2015 |
| | | | KR | 20150024869 A | 09-03-2015 |
| | | | PL | 2855568 T3 | 28-09-2018 |
| | | | US | 2015240076 A1 | 27-08-2015 |
| | | | WO | 2013182506 A1 | 12-12-2013 |

EPO FORM P0459

For more details about this annex : see Official Journal of the European Patent Office, No. 12/82